## Europäisches Patentamt

## European Patent Office

## Office européen des brevets

(19)

(11) Veröffentlichungsnummer: **0 052 732**
**B1**

(12)

# EUROPÄISCHE PATENTSCHRIFT

(45) Veröffentlichungstag der Patentschrift:
**02.05.85**

(21) Anmeldenummer: **81108072.0**

(22) Anmeldetag: **08.10.81**

(51) Int. Cl.⁴: **C 08 L 25/12,** C 08 L 51/04,
C 08 L 55/02

(54) **Thermoplastische Formmasse.**

(30) Priorität: **24.11.80 DE 3044110**

(43) Veröffentlichungstag der Anmeldung:
**02.06.82 Patentblatt 82/22**

(45) Bekanntmachung des Hinweises auf die Patenterteilung:
**02.05.85 Patentblatt 85/18**

(84) Benannte Vertragsstaaten:
**BE DE FR GB IT NL**

(56) Entgegenhaltungen:
**EP - A - 0 011 158**
**DE - A - 2 901 576**
**DE - A - 3 018 591**

(73) Patentinhaber: **BASF Aktiengesellschaft,**
**Carl-Bosch-Strasse 38, D-6700 Ludwigshafen (DE)**

(72) Erfinder: **Schmitt, Burghard, Dr., Hermannstrasse 3,**
**D-6520 Worms (DE)**
Erfinder: **Benker, Klaus, Fuerstenweg 52,**
**D-6730 Neustadt (DE)**
Erfinder: **Priebe, Edmund, Dr., Bensheimer Ring 7A,**
**D-6710 Frankenthal (DE)**
Erfinder: **Lindenschmidt, Gerhard, Dr., Buchenweg 11,**
**D-6906 Leimen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine thermoplastische Formmasse, die in einer Matrix aus vorzugsweise einem Mischpolymerisat auf Basis von Styrol und Acrylnitril zwei Pfropfmischpolymerisate enthält, von denen das eine vorzugsweise in Lösung und das andere in Emulsion gewonnen wurde.

Thermoplastische Formmassen, die ein Mischpolymerisat als Matrix und zwei verschiedene Pfropfmischpolymerisate enthalten sind bereits aus

1) DE-AS 1 745 098
2) DE-AS 1 900 134
3) DE-AS 1 921 112

bekannt.

Die aus (1), (2) oder (3) bekannten Formmassen besitzen ein Eigenschaftsbild, das in seiner Gesamtheit, speziell aber hinsichtlich der Schlagzähigkeit, Kerbschlagzähigkeit und Bruchenergie bei −40°C, sowie des Fliessverhaltens, der Wärmestandfestigkeit und der Oberflächeneigenschaften noch nicht voll befriedigt.

In der DE-A 2 901 576 ist eine thermoplastische Formmasse aus einer Hartmatrix, z.B. Styrol-Acrylnitril, und zwei in Emulsion hergestellten Pfropfmischpolymerisaten (Weichkomponenten) unterschiedlicher Zusammensetzung und unterschiedlicher mittlerer Teilchengrösse beschrieben. Es handelt sich bei dem einen Pfropfmischpolymerisat um ein ABS-Polymerisat, bei dem anderen um ein ASA-Polymerisat. Die bekannten Formmassen zeigen eine gute Schlagzähigkeit, insbesondere in der Kälte und ein gutes Verarbeitungsverhalten.

In der EP-A 0 011 158 ist eine thermoplastische Formmasse aus einer Hartmatrix aus z.B. Styrol und Acrylnitril und zwei jeweils in Emulsion hergestellten Pfropfmischpolymerisaten unterschiedlicher Zusammensetzung und unterschiedlicher mittlerer Teilchengrösse beschrieben. Es handelt sich bei dem einen Pfropfmischpolymerisat z.B. um ein ABS-Polymerisat und das andere Pfropfmischpolymerisat weist ein Terpolymerisat aus Acrylester, Butadien und Vinylether als Pfropfgrundlage auf. Die bekannte Formmasse besitzt eine gute Schlagzähigkeit insbesondere in der Kälte, eine geringe Lichtempfindlichkeit und ein gutes Verarbeitungsverhalten.

Es bestand daher die Aufgabe, Formmassen zur Verfügung zu stellen, die ein Gesamteigenschaftsbild aufweisen, das besser ist als das von den Produkten vom Stand der Technik. Dies äussert sich darin, dass einige, in vielen Fällen alle der vorgenannten Eigenschaften verglichen mit denen der bekannten Massen, verbessert sind.

Die Erfindung geht aus von einer thermoplastischen Formmasse nach der Gattung des Oberbegriffs des Patentanspruchs 1. Die erfindungsgemässe Formmasse, mit dem kennzeichnenden Merkmal des Patentanspruchs 1, liefert Massen mit einem deutlich verbesserten Gesamteigenschaftsbild. Durch die in den Unteransprüchen aufgeführten Massnahmen ist eine vorteilhafte Weiterbildung und Verbesserung der im Hauptanspruch angegebenen Formmassen möglich. Besonders vorteilhaft wird die Verbesserung der Oberflächeneigenschaften («grössere Glanzbreite») deutlich, durch Erhalt des Oberflächenglanzes bei der Herstellung von Formteilen aus Formmassen nach dem Spritzgussverfahren bei Temperaturen im Bereich oberhalb von 220 bis 240°C.

Das Mischpolymerisat A ist aus Monomeren, die eine harte Phase bilden, aufgebaut. Es kann auf üblichem Wege durch Polymerisieren eines vinylaromatischen Monomeren in Anteilen von 80 bis 60 Gew.%, insbesondere 75 bis 65 Gew.%, in Mischung mit einem äthylenisch ungesättigten Vinylmonomeren wie Acrylnitril, in Anteilen von 40 bis 20, insbesondere von 35 bis 25 Gew.% oder MMA in Anteilen von 20 bis 40% hergestellt werden. Als vinylaromatisches Monomeres $a_1$ kommen Styrol sowie die Alkylstyrole, hierbei insbesondere das α-Methylstyrol in Frage. α-Methylstyrol wird vorwiegend dann eingesetzt, wenn hohe Wärmeformbeständigkeit der Formmassen eingestellt werden soll. Üblicherweise werden für diesen Zweck Mischungen von Styrol und Acrylnitril mit bis zu 30 Gew.% α-Methylstyrol angewendet. Bevorzugt werden Mischpolymerisate A angewendet, die 20 bis 35 Gew.% Acrylnitril und 80 bis 65 Gew.% Styrol enthalten. Diese Mischpolymerisate sind im Handel erhältlich und können z.B. nach der Lehre der DE-AS 1 001 001 bzw. nach der Lehre der DE-PS 1 003 436 hergestellt werden. Der Molekulargewichtsbereich des Mischpolymerisats A beträgt von 80 000 bis 250 000 (Gewichtsmittel $\bar{M}_w$ aus Lichtstreuung).

Die erfindungsgemässe Formmasse enthält 5 bis 80, vorzugsweise 10 bis 50 Gew.% des Mischpolymerisates A, jeweils bezogen auf die Summe von A + B + C und stellt die Matrix für die nachstehend beschriebenen Pfropfmischpolymerisate B und C dar.

Das Pfropfmischpolymerisat B wird vorzugsweise in Lösung hergestellt. Es ist aufgebaut aus 2 Phasen, einer Hartphase ba), aus je mindestens einem vinylaromatischen Monomeren bc) und einem äthylenisch-ungesättigten Monomeren bd), und einer Elastomerphase bb). Letztere ist aufgebaut aus einem kautschukartigen Polymerisat- oder Copolymerisat, das entweder im wesentlichen ein aliphatisches Dien mit 4 oder gegebenenfalls 5 Kohlenstoffatomen oder eine Mischung aus diesen enthält. Das Copolymerisat kann auch einen Diengehalt zwischen 60 und 85 Gew.% und einen Anteil von 15 bis 40 Gew.% eines vinylaromatischen Monomeren, insbesondere Styrol, aufweisen. Bevorzugt werden Polybutadiene mit cis-Gehalten von 30 bis 40% und 1,2-Vinylgehalten von 7 bis 14%. Von den Copolymerisaten werden insbesondere die Blockcopolymerisate von Styrol und Butadien bevorzugt. Es können auch Gemische aus Polybutadien- und Styrol-Butadienblock-Kautschuken angewendet werden. Wesentlich ist, dass die Elastomerphase bb) des Pfropfmischpolymerisates B einen Partikeldurchmesser im Bereich von 0,5 bis 5 Micrometer, insbesondere einen solchen im Bereich von 0,9 bis 2,1 µm aufweist. Es handelt sich bei allen Angaben über die Partikeldurchmesser um Zahlenmittelwerte.

Die Elastomerphase bb) des Pfropfmischpolymerisates B als auch die entsprechende Phase cb) des Pfropfmischpolymerisates C und die der Formmasse sind mittels elektronenmikroskopischer Aufnahmen nach besonderen Techniken wie Osmiumtetroxid-Kontrastierung sichtbar zu machen. Als vinylaromatische Monomere bc) für den Aufbau des Pfropfmischpolymerisates B kommen vorzugsweise im wesentlichen Styrol alleine oder aber Mischungen von Styrol und α-Methylstyrol, letzteres insbesondere zur Erzielung wärmeformbeständiger Formmassen, in Betracht. Die vinylaromatischen Monomeren werden vorzugsweise zusammen mit den äthylenisch ungesättigten Monomeren bd), nämlich Acrylnitril oder Methylmethacrylat angewendet. Sofern die Hartphase ba) des Pfropfmischpolymerisats B, überwiegend aus Acrylnitril und Styrol aufgebaut wird, werden Mischungen von 22 bis 29 Acrylnitril und 78 bis 71 Gew.% Styrol zur Herstellung der Hartphase angewendet. Im Falle des Aufbaus der Hartphase aus Acrylnitril, Styrol und α-Methylstyrol, werden 22 bis 28 Gew.% der Monomeren bd) und 78 bis 72 Gew.% der Monomeren bc) in der Mischung aus 100 Gew.-Teilen vorgelegt.

Im Fall des Aufbaus der Hartphase des Pfropfmischpolymerisates B aus Styrol und Methylmethacrylat werden Gewichtsverhältnisse S/MMA von 80/20 bis 45/55 angewendet.

Die Monomerenmischung für die Herstellung des Pfropfmischpolymerisats B kann somit 78 bis 65 Gew.% des vinylaromatischen Monomeren bc) und 22 bis 35 Gew.% des äthylenisch-ungesättigten Monomeren bd) enthalten. Je nach den Anforderungen, die an die Formmasse gestellt werden, kann man innerhalb der angegebenen Bereiche die Mischung variieren, um zu mehr oder weniger wärmeformbeständigen oder bei Anteilen der Grundbausteine bd) an den oberen Grenzen der genannten Bereiche chemikalienbeständigeren Formmassen zu gelangen. Die Herstellung des Pfropfmischpolymerisats B erfolgt vorzugsweise durch Umsetzen von 100 Gew.-Teilen einer Mischung der ein hartes Polymerisat bildenden Monomeren (bc + bd) in Gegenwart von 10 bis 20 Gew.-Teilen eines darin gelösten Elastomeren-Polymerisats oder Copolymerisats als Pfropfgrundlage. Die Pfropfcopolymerisation kann in Gegenwart indifferenter Lösungsmittel durchgeführt werden; beispielsweise können 5 bis 30 Gew.%, bezogen auf die Gesamtlösung, eines Alkylaromaten, insbesondere Äthylbenzol, angewendet werden. Eine bevorzugte Arbeitsweise besteht darin, dass das Pfropfmischpolymerisat B gemäss der Lehre der DE-OS 1 495 089 hergestellt wird. Die Pfropfcopolymerisation von Styrol und Acrylnitril kann in Gegenwart von Butadienpolymerisaten mit Grenzviskositäten zwischen 60 und 200 ml/g einem Anteil von 85% oder mehr an 1,4-Struktur und einem Anteil von über 30% cis-Konfiguration erfolgen. Bei der Verwendung von Blockcopolymerisaten aus Butadien-Styrol, insbesondere von Blockcopolymerisaten, die durch anionische Polymerisation mit Hilfe von litiumorganischen Initiatoren hergestellt werden, oder bei Verwendung von Mischungen aus Polybutadien und bestimmten Anteilen an Blockcopolymerisaten als Elastomerphase werden im Prinzip dieselben Herstellungsbedingungen eingehalten. Die Pfropfcopolymerisation wird zweckmässigerweise in mehreren Stufen bei Temperaturen zwischen 60 und 170°C, vorzugsweise zwischen 100 und 160°C durchgeführt. Die Polymerisation kann thermisch oder durch Initiatoren in bekannter Weise ausgelöst werden. Bei der Polymerisation können die üblichen Hilfsstoffe, nämlich Regler wie Dodecylmercaptan, Stabilisatoren und Schmiermittel zugegen sein. Die üblichen Mittel und die wirksamen Mengen sind dem Fachmann bekannt. Bei der Durchführung der Pfropfpolymerisation müssen die Bedingungen so eingestellt werden, dass 10 bis 50 Gew.% der die Hartphase ba) bildenden Monomeren (bc und bd) bezogen auf die Summe der die Elastomerphase bildenden Monomeren be) oder bc) und be) oder be) und bd) auf die Pfropfgrundlage aufgepfropft worden sind. Werden weniger als 10 Gew.% gepfropft, wird die Schlagzähigkeit der Formmassen und auch deren Oberflächenglanz infolge Ausbildung zu grosser Elastomerpartikel (Durchmesser der Elastomerphase 5 µm) nachteilig beeinflusst. Werden mehr als 40 Gew.% aufgepfropft, so resultieren veränderte Strukturen der Elastomerphase mit ebenfalls häufig wieder kleineren Partikeldimensionen und niedrigeren Zähigkeitswerten. Besonders bevorzugt wird ein Pfropfgrad von 15 bis 30 Gew.%.

Als Pfropfmischpolymerisat C wird ein Emulsionspropfcopolymerisat verwendet, das ca) eine Hartphase als Pfropfreis und cb) eine Elastomerphase als Pfropfgrundlage aufweist. Die Hartphase des Emulsionspfropfmischpolymerisates enthält im wesentlichen mindestens 1 vinyl-aromatisches Monomeres und ein äthylenisch-ungesättigtes Monomeres. Als äthylenisch-ungesättigte Monomere kommen insbesondere ˈAcrylnitril oder Methylmethacrylat oder Mischungen dieser beiden Monomeren in Betracht. Als vinylaromatisches Monomeres wird bevorzugt Styrol verwendet. Es kann jedoch auch Styrol in Mischung mit -Methylstyrol angewendet werden, jedoch ist dies nicht bevorzugt. Die Elastomerphase cb) ist ein Copolymerisat, das im wesentlichen aus einem aliphatischen Dien mit 4 bis 5 C-Atomen aufgebaut ist oder zusätzlich zu diesem(n) ein Monomeres eines Acrylsäurealkylesters mit 2 bis 8 C-Atomen im Alkylrest enthält oder überwiegend aus mindestens einem Monomeren eines Acrylsäurealkylesters mit 2 bis 8 C-Atomen im Alkylrest aufgebaut ist. Die Verwendung nur von aliphatischen Dienen als Monomere in der Pfropfgrundlage bewirkt im wesentlichen eine positive Beeinflussung der Tieftemperaturzähigkeit und des Oberflächenglanzes der Formmassen.

Die Anwendung von überwiegend einem Acrylsäurealkylester in der Pfropfgrundlage bewirkt gute Alterungs- und Witterungsbeständigkeit sowie gute Beständigkeit gegen Verfärbung und gegen Temperaturbelastung bei thermoplastischer Verarbeitung der Formmasse.

Das Pfropfmischpolymerisat C wird in üblicher Weise hergestellt durch Pfropfcopolymerisation von einer Monomerenmischung aus mindestens je einem vinylaromatischen Monomeren und einem äthylenisch-ungesättigten Monomeren (cc und cd) in einer wässrigen Emulsion eines kautschukartigen Polymerisats der Monomeren (cc) als Pfropfgrundlage in einem Anteil von 20 bis 60 Gew.%, bezogen auf die Summe von (cc), (cd) und (ce). Bevorzugt wird als vinylaromatisches Monomeres Styrol, gegebenenfalls allerdings weniger bevorzugt in Mischung mit $\alpha$-Methylstryrol angewendet. Als äthylenisch-ungesättigtes Monomeres kommt insbesondere Acrylnitril und Methylmethacrylat in Betracht. Das kautschukartige Polymerisat, das die Pfropfgrundlage bildet, kann aus einem aliphatischen Dien mit 4 oder 5 C-Atomen aufgebaut sein. Besonders bevorzugt wird Polybutadien als Emulsionspolymerisat mit einem cis-Gehalt von 20 bis 30%, und einem 1,2-Vinylgehalt von 18 bis 25% und etwa 55% 1,4-trans-Konfiguration. Anstelle des Diens kann jedoch auch ein Monomeres eines Acrylsäurealkylesters mit 2 bis 8 C-Atomen im Alkylrest angewendet werden. Besonders bevorzugt ist Acrylsäurebutylester und der 2-Äthylhexylacrylsäureester. Es können jedoch auch Copolymerisate aus Acrylestern mit bis zu 60 Gew.% Butadien zur Anwendung gelangen. Insbesondere wird ein Terpolymerisat aus bis 77 Gew.% Acrylsäurebutylester, 20 bis 40 Gew.% Butadien und 3 bis 20 Gew.% Vinylalkyläther, wobei sich die Prozentangaben zu 100 ergänzen müssen, letzterer mit 1 bis 4 Kohlenstoffatomen im Alkylrest, angewendet. Das Gewichtsverhältnis der das Pfropfreis bildenden Monomeren cc) zu cd) kann im Bereich von 45 zu 55 (bei Verwendung von MMA) bzw. von 60 zu 40 (bei Einsatz von AN) bis 90 zu 10 liegen. Die Pfropfpolymerisation wird dabei so durchgeführt, dass zu einer wässrigen Emulsion des Polybutadien- oder Acrylester-Polymeren bzw. des Copolymeren aus diesen Bestandteilen oder des beschriebenen Terpolymeren eine Monomeren-Mischung der das Pfropfreis bildenden Monomeren cc) und cd) im vorstehend genannten Gewichtsverhältnis zugegeben wird. Bei der Pfropfung können dabei gegebenenfalls weiter Emulgatoren zugesetzt werden. Die Polymerisation wird durch radikalbildende Initiatoren, wie Azoverbindungen oder Peroxide, ausgelöst. Die Polymerisationstemperatur kann zwischen 50 und 100°C liegen. Für die Durchführung der Polymerisation können übliche Hilfsstoffe wie Regler und Stabilisatoren zugegen sein.

Wesentlich für die Erzielung eines ausgewogenen Eigenschaftsbildes der thermoplastischen Formmasse ist, dass die das Pfropfmischpolymerisat C bildende Elastomerphase cb) Partikel zweier unterschiedlicher mittlerer Grössen aufweist.

Nämlich einen Anteil mit dem Partikeldurchmesser $cb_1$) im Bereich von 0,05 bis 0,18 µm, bevorzugt werden 0,08 bis 0,15 µm.

Der Anteil der Elastomerphase $cb_1$) des Pfropfmischpolymerisates C in der Formmasse mit Partikeldurchmesser $cb_1$) im Bereich 0,05 bis 0,18 µm muss weniger als 60 Gew.% und soll bevorzugt jedoch weniger als 30 Gew.%, bezogen auf die Summe aller aus den Pfropfmischpolymerisaten B + C stammenden Elastomerphasen betragen.

Bei Anteilen der kleinteiligen Elastomerphase $cb_1$ von mehr als 60 Gew.% am Gesamtelastomer sinkt die Zähigkeit, speziell die Kerbschlagzähigkeit nach DIN 53 453 deutlich ab. Gleichzeitig verursachen hohe Anteile der kleinteiligen Elastomerphase verminderte Fliessfähigkeit, geringere Kältezähigkeit und eine Bearbeitungstemperaturabhängigkeit der mechanischen Eigenschaften. Letztere wird verursacht durch die Neigung kleiner Elastomerpartikel zur Clusterbildung im aufgeschmolzenen Mischpolymerisat bei thermoplastischer Verarbeitung.

Bei sehr geringen Anteilen (<10 Gew.%) oder vollständiger Abwesenheit kleinteiliger Elastomerpartikel fällt die Bruchenergie bei biaxialer Belastung (Fallrohrtest) drastisch ab. Gleichzeitig sinkt die Wärmestandfestigkeit und infolge stärkerer Orientierung bei thermoplastischer Verarbeitung steigt der Schrumpf an.

Die Elastomerphase des Pfropfmischpolymerisates C muss ferner einen zweiten Anteil von Partikeln mit mittleren Durchmessern im Bereich von 0,25 bis 0,6 µm, bevorzugt 0,35 bis 0,50 µm aufweisen. Die vorstehenden Angaben beziehen sich wieder auf das Zahlenmittel der Partikelgrösse.

In der erfindungsgemässen thermoplastischen Formmasse muss das Gewichtsverhältnis der beiden Elastomerphasen $cb_1$) und $cb_2$) des Pfropfmischpolymerisats C im Bereich von 80:20 bis 20:80 liegen.

Gewichtsverhältnisse von $cb_1$ zu $cb_2$ grösser 4 bedingen die voranstehend genannten Nachteile für zu hohe Anteile der kleinteiligen Elastomerphase.

Liegt das Gewichtsverhältnis $cb_1$ zu $cb_2$ bei Werten von kleiner als 1:4, so ergeben sich Schwierigkeiten hinsichtlich der Stabilität der Dispersionen bei Durchführung der Pfropfpolymerisation.

Der Anteil der beiden Pfropfmischpolymerisate B + C an der erfindungsgemässen Formmasse, gebildet aus A + B + C, soll im Bereich von 20 bis 95 Gew.% liegen. Bei Unterschreiten des unteren Wertes von 20 Gew.% lässt die Wirkung des Verstärkerkautschuks rasch nach, die Materialien werden steif und spröde. Bei Überschreiten des Wertes von 95 Gew.% schlägt der kautschukartige Charakter immer stärker durch; Steifigkeit und Fliessfähigkeit sinken drastisch ab, eine thermoplastische Verarbeitung wird immer schwieriger.

Die Einstellung eine Teilchengrössenbereiches für die Elastomerphase cb) des Pfropfmischpolymerisates C von 0,05 bis 0,18 μm (cb$_1$) bzw. 0,25 bis 0,6 Micrometer (cb$_2$) erfolgt auf bekanntem Weg. Verschiedene Methoden hierfür sind in der DE-AS 2 497 960 aufgeführt, auf die, stellvertretend für den umfangreichen Stand der Technik, verwiesen wird. Besonders bevorzugt zur Einstellung der bimodalen Verteilung der Elastomerphase des Pfropfmischpolymerisats C ist das in der zitierten DE-AS beschriebene Agglomerierverfahren. Bei Verwendung dieses bekannten Verfahrens wird zunächst ein Emulsionspolymerisat der Elastomerphase cb) in an sich bekannter Weise hergestellt. Aus diesem wird mit Hilfe des Agglomerierverfahrens ein bestimmter Anteil des Emulsionspolymerisates durch Agglomeration in den Teilchengrössenbereich von 0,25 bis 0,6 μm überführt, so, dass der Anteil der Elastomerphase cb$_1$) mit Teilchengrössen im Bereich von 0,08 bis 0,15 weniger als 60 Gew.% bezogen auf die Summe der Elastomerphasen cb$_1$), cb$_2$) und bb) beträgt und unter Beachtung des Verhältnisses cb$_1$) zu cb$_2$) = 4:1 bis 1:4. Im Anschluss an die Agglomeration kann dann die Pfropfung in einem Schritt auf die nichtagglomerierten und auf die durch Agglomeration vergrösserten Teilchen erfolgen. Beim bekannten Verfahren kann die Pfropfung auch bei hohen Feststoffgehalten in der Emulsion ohne Schwierigkeiten durchgeführt werden. Dies ist ein besonderer Vorteil des aus der DE-AS bekannten Agglomerierverfahrens gegenüber dem Verfahren der Essigsäureagglomeration und anderen bekannten Verfahren zur Vergrösserung der Teilchen durch Scherung oder Gefriertrocknung. Es ist auch möglich, mit Hilfe der Saatlatexfahrweise die bimodale Verteilung der Partikel der Elastomerphase der Pfropfgrundlage des Pfropfmischpolymerisates C zu erzeugen. Jedoch ist eine solche Präparation zeitaufwendiger, da zusätzlich ein Saatlatex und danach vergrösserte Teilchen hergestellt werden müssen und die Polymerisation von Butadien auf einen Saatlatex zur Herstellung grösserer Teilchen sehr lange Reaktionszeiten erfordert.

Die erfindungsgemässen Formmassen können gegebenenfalls weitere Zusatzstoffe enthalten. Als solche kommen in Betracht, z.B. Füllstoffe, sowie Pigmente, ferner Stabilisatoren, Antioxidantien, Schmier- bzw. Gleitmittel. Es handelt sich hierbei um Stoffe, die dem Fachmann ganz allgemein bekannt sind und die in den üblichen, wirksamen Mengen zugesetzt werden können.

Zur Herstellung der erfindungsgemässen Formmasse werden die Komponenten A, B und C bei Temperaturen zwischen 220 und 300°C auf üblichen Verarbeitungsmaschienen wie Extrudern, Walzen oder Knetern vermischt, gegebenenfalls unter direkter Einspeisung der wässrigen Dispersion der Pfropfkautschukkomponente C und gleichzeitiger Trocknung. Bereits bei der Herstellung dieser Mischung können die vorstehend erwähnten Zusatzstoffe zugesetzt werden.

Die in den nachfolgenden Tabellen 1, 2 und 3 aufgeführten Mischpolymerisate A.. bzw. Pfropfmischpolymerisate B.. und C.. wurden verwendet zur Herstellung von Formmassen gemäss vorliegender Erfindung oder zum Vergleich.

Die in der Beschreibung und den Beispielen genannten Eigenschaften und Kenndaten wurden nach folgenden Methoden bestimmt:

1. Teilchendurchmesser der Elastomerpartikel (Zahlenmittel) durch Auszählung elektronenmikroskopischer Aufnahmen

2. Kerbschlagzähigkeit a$_{kl}$ nach DIN 53 453 an spritzgegossenen Normkleinstäben bei verschiedenen Temperaturen (Raumtemp. 20°C, −20°C, −40°C)

3. Brucharbeit als biaxialer Durchstossversuch (Fallrohrtest, FBT DIN 53 443) an bei 250°C spritzgegossenen Rundplättchen von 60 × 2 mm

4. Oberflächenglanz bzw. Glanzbreite durch Messung der Reflexion sichtbaren Lichts an der Oberfläche spritzgegossener Platten im Vergleich zu einem weissen Fliesspapier als Standard (mit der Zuordnung, 0% Reflexion). Zur Bewertung der Glanzbreite werden Spritztemperatur, Formtemperatur und Einspritzzeit variiert. Es bedeuten:

KT 1 Kunststofftemp.: 280°C  
     Formtemp.    : 60°C  
     Einspritzzeit   : 0,4 sek.  
KT 2 Kunststofftemp.: 220°C  
     Formtemp.    : 30°C  
     Einspritzzeit   : 2,0 sek.

5. Fliessverhalten als Schmelzindex MFI 200°C/21,6 kp in Gramm/10 Minuten (DIN 53 735)

6. Wärmestandfestigkeit als Vicat-Temperatur in °C (DIN 53 460)

7. Das Molekulargewichtmittel, $\bar{M}_w$, wurde durch Lichtstreuung bestimmt.

Die Erfindung wird nachstehend anhand von Beispielen und Vergleichsversuchen näher erläutert. Die in den Beispielen genannten Teile und Prozente beziehen sich, sofern nichts anderes vermerkt ist, auf das Gewicht.

Beispiele 1 bis 63 und Vergleichsversuche 1 bis 4:

In der Tabelle 4 sind die Ergebnisse von Messungen an Formmassen gemäss vorliegender Erfindung, Beispiele 1 bis 63, denen von Massen vom Stand der Technik gegenübergestellt. Aus dem Vergleich der Messwerte ist ersichtlich, dass die erfindungsgemässen Formmassen denen vom Stand der Technik überlegen sind.

Tabelle 1 Mischpolymerisate A..

| Bezeichnung | Zusammensetzung in Gew.% | | | | Molekular-gewicht $\bar{M}_w$ |
| --- | --- | --- | --- | --- | --- |
| | Styrol | α-Methyl-styrol | AN (Acryl-nitril) | MMA (Methyl-metha-crylat) | |
| $A_{11}$ | 80 | – | 20 | – | 220.000 |
| $A_{12}$ | 75 | – | 25 | – | 150.000 |
| $A_{13}$ | 65 | – | 35 | – | 92.000 |
| $A_{22}$ | 80 | – | – | 20 | 320.000 |
| $A_{23}$ | 75 | – | – | 25 | 360.000 |
| $A_{31}$ | 45 | 30 | 25 | – | 155.000 |
| $A_{32}$ | 40 | 30 | 30 | – | 127.000 |

Tabelle 2 Propfmischpolymerisate B..

| Bezeichnung | Zusammensetzung d. Pfropfmischpolym. | | | Elastomerphase Zusammensetzung | | mittl. Durchmesser μm | Anteil d. Elastomer-phase |
| --- | --- | --- | --- | --- | --- | --- | --- |
| | S (Styrol) | AN | Bu (Butadien) | S | Bu | | |
| $B_{11}$ | 62 | 23 | 15 | – | 100 | 2,1 | 15 |
| $B_{21}$ | 66,6 | 19,4 | 14 | 30 | 70 | 0,9 | 20 |

Tabelle 3 Pfropfmischpolymerisate C..

| Bezeichnung | Zus. der Hartphase (Pfropfhülle) | | Zus. d. Elastomerphase | | | Propf-grad | Durchmesser | |
| --- | --- | --- | --- | --- | --- | --- | --- | --- |
| | S | AN | Bu | BA (Butyl-acrylat) | AHA (2-Ethyl-hexylacrylat) | | klein μm | gross μm |
| $C_{11}$ | 70 | 30 | 100 | – | – | 40 | 0,11 | 0,38 |
| $C_{12}$ | 70 | 30 | 40 | 60 | – | 35 | 0,11 | 0,35 |
| $C_{13}$ | 70 | 30 | – | 100 | – | 30 | 0,09 | 0,45 |
| $C_{14}$ | 70 | 30 | – | – | 100 | 30 | 0,08 | 0,47 |
| $C_{21}$ | 75 | 25 | 100 | – | – | 40 | 0,11 | 0,38 |
| $C_{22}$ | 75 | 25 | 40 | 60 | – | 35 | 0,11 | 0,35 |
| $C_{23}$ | 75 | 25 | – | 100 | – | 30 | 0,09 | 0,45 |
| $C_{24}$ | 75 | 25 | – | – | 100 | 30 | 0,08 | 0,47 |
| $C_{31}$ | 80 | 20 | 100 | – | – | 40 | 0,11 | 0,38 |
| $C_{32}$ | 80 | 20 | 40 | 60 | – | 35 | 0,11 | 0,35 |
| $C_{33}$ | 80 | 20 | – | 100 | – | 30 | 0,09 | 0,45 |
| $C_{34}$ | 80 | 20 | – | – | 100 | 30 | 0,08 | 0,47 |

Tabelle 4

| Beispiel Nr. | Art und Anteil der Komponenten | | | Elastomerphase | | | | Verhältnis $cb_1/cb_2$ |
| --- | --- | --- | --- | --- | --- | --- | --- | --- |
| | A [Teile] | B [Teile] | C [Teile] | Anteil am Gesamt-prod.% | Zusammensetzung [Teile] | | | |
| | | | | | $cb_1$ | $cb_2$ | bb | |
| 1 | 5 $A_{11}$ | 73,3 $B_{11}$ | 21,7 $C_{11}$ | 24 | 10,8 | 43,4 | 45,8 | 20/80 |
| 2 | 5 $A_{12}$ | 73,3 $B_{11}$ | 21,7 $C_{11}$ | 24 | 10,8 | 43,4 | 45,8 | 20/80 |
| 3 | 5 $A_{13}$ | 73,3 $B_{11}$ | 21,7 $C_{11}$ | 24 | 10,8 | 43,4 | 45,8 | 20/80 |
| 4 | 20 $A_{13}$ | 53,3 $B_{11}$ | 26,7 $C_{11}$ | 24 | 13,3 | 53,4 | 33,3 | 20/80 |
| 5 | 40 $A_{13}$ | 26,7 $B_{11}$ | 33,3 $C_{11}$ | 24 | 16,7 | 66,7 | 16,7 | 20/80 |
| 6 | 16,6 $A_{13}$ | 66,7 $B_{11}$ | 16,7 $C_{11}$ | 20 | 10,0 | 40,0 | 50,0 | 20/80 |
| 7 | 26,7 $A_{13}$ | 53,3 $B_{11}$ | 20,0 $C_{11}$ | 20 | 12,0 | 48,0 | 40,0 | 20/80 |
| 8 | 46,6 $A_{13}$ | 26,7 $B_{11}$ | 26,7 $C_{11}$ | 20 | 16,0 | 64,0 | 20,0 | 20/80 |
| 9 | 23,3 $A_{13}$ | 55,0 $B_{21}$ | 21,7 $C_{11}$ | 24 | 10,8 | 43,4 | 45,8 | 20/80 |
| 10 | 5 $A_{13}$ | 73,3 $B_{11}$ | 21,7 $C_{21}$ | 24 | 10,8 | 43,4 | 45,8 | 20/80 |
| 11 | 5 $A_{13}$ | 73,3 $B_{11}$ | 21,7 $C_{31}$ | 24 | 10,8 | 43,4 | 45,8 | 20/80 |
| 12 | 5,9 $A_{13}$ | 63,6 $B_{11}$ | 30,8 $C_{11}$ | 28 | 13,2 | 52,9 | 33,9 | 20/80 |

Tabelle 4 (Fortsetzung)

| Beispiel Nr. | Art und Anteil der Komponenten A [Teile] | B [Teile] | C [Teile] | Elastomerphase Anteil am Gesamt-prod.% | Zusammensetzung [Teile] $cb_1$ | $cb_2$ | bb | Verhältnis $cb_1/cb_2$ |
|---|---|---|---|---|---|---|---|---|
| 13 | 20 $A_{22}$ | 53,8 $B_{11}$ | 26,7 $C_{11}$ | 24 | 13,3 | 53,4 | 33,3 | 20/80 |
| 14 | 20 $A_{23}$ | 53,8 $B_{11}$ | 26,7 $C_{11}$ | 24 | 13,3 | 53,4 | 33,3 | 20/80 |
| 15 | 20 $A_{31}$ | 53,8 $B_{11}$ | 26,7 $C_{11}$ | 24 | 13,3 | 53,4 | 33,3 | 20/80 |
| 16 | 20 $A_{33}$ | 53,8 $B_{11}$ | 26,7 $C_{11}$ | 24 | 13,3 | 53,4 | 33,3 | 20/80 |
| 17 | 6,7 $A_{11}$ | 73,3 $B_{11}$ | 20,0 $C_{12}$ | 24 | 10,8 | 43,4 | 45,8 | 20/80 |
| 18 | 6,7 $A_{12}$ | 73,3 $B_{11}$ | 20,0 $C_{12}$ | 24 | 10,8 | 43,4 | 45,8 | 20/80 |
| 19 | 6,7 $A_{13}$ | 73,3 $B_{11}$ | 20,0 $C_{12}$ | 24 | 10,8 | 43,4 | 45,8 | 20/80 |
| 20 | 22,1 $A_{13}$ | 53,3 $B_{11}$ | 24,6 $C_{12}$ | 24 | 13,3 | 53,4 | 33,3 | 20/80 |
| 21 | 42,5 $A_{13}$ | 26,7 $B_{11}$ | 30,8 $C_{12}$ | 24 | 16,7 | 66,7 | 16,7 | 20/80 |
| 22 | 17,9 $A_{13}$ | 66,7 $B_{11}$ | 15,4 $C_{12}$ | 20 | 10,0 | 40,0 | 50,0 | 20/80 |
| 23 | 27,7 $A_{13}$ | 53,8 $B_{11}$ | 18,5 $C_{12}$ | 20 | 12,0 | 48,0 | 40,0 | 20/80 |
| 24 | 48,7 $A_{13}$ | 26,7 $B_{11}$ | 24,6 $C_{12}$ | 20 | 16,0 | 64,0 | 20,0 | 20/80 |
| 25 | 25,0 $A_{13}$ | 55,0 $A_{21}$ | 20,0 $C_{12}$ | 24 | 10,8 | 43,4 | 45,8 | 20/80 |
| 26 | 6,7 $A_{13}$ | 73,3 $B_{11}$ | 20,0 $C_{22}$ | 24 | 10,8 | 43,4 | 45,8 | 20/80 |
| 27 | 6,7 $A_{13}$ | 73,3 $B_{11}$ | 20,0 $C_{32}$ | 24 | 10,8 | 43,4 | 45,8 | 20/80 |
| 28 | 8,2 $A_{13}$ | 63,3 $B_{11}$ | 28,5 $C_{12}$ | 28 | 13,2 | 52,9 | 33,9 | 20/80 |
| 29 | 22,1 $A_{22}$ | 53,8 $B_{11}$ | 24,6 $C_{12}$ | 24 | 13,3 | 53,4 | 33,3 | 20/80 |
| 30 | 22,1 $A_{23}$ | 53,8 $B_{11}$ | 24,6 $C_{12}$ | 24 | 13,3 | 53,4 | 33,3 | 20/80 |
| 31 | 22,1 $A_{31}$ | 53,8 $B_{11}$ | 24,6 $C_{12}$ | 24 | 13,3 | 53,4 | 33,3 | 20/80 |
| 32 | 22,1 $A_{32}$ | 53,8 $B_{11}$ | 24,6 $C_{12}$ | 24 | 13,3 | 53,4 | 33,3 | 20/80 |
| 33 | 8,1 $A_{11}$ | 73,3 $B_{11}$ | 18,6 $C_{13}$ | 24 | 19,0 | 35,2 | 45,8 | 35/65 |
| 34 | 8,1 $A_{12}$ | 73,3 $B_{11}$ | 18,6 $C_{13}$ | 24 | 19,0 | 35,2 | 45,8 | 35/65 |
| 35 | 8,1 $A_{13}$ | 73,3 $B_{11}$ | 18,6 $C_{13}$ | 24 | 19,0 | 35,2 | 45,8 | 35/65 |
| 36 | 23,3 $A_{13}$ | 53,3 $B_{11}$ | 22,9 $C_{13}$ | 24 | 23,3 | 43,4 | 33,3 | 35/65 |
| 37 | 44,7 $A_{13}$ | 26,7 $B_{11}$ | 28,6 $C_{13}$ | 24 | 29,2 | 54,1 | 16,7 | 35/65 |
| 38 | 19,0 $A_{13}$ | 16,7 $B_{11}$ | 13,3 $C_{13}$ | 20 | 17,5 | 32,5 | 50,0 | 35/65 |
| 39 | 29,1 $A_{13}$ | 53,8 $B_{11}$ | 17,1 $C_{13}$ | 20 | 21,0 | 29,0 | 40,0 | 35/65 |
| 40 | 50,4 $A_{13}$ | 26,7 $B_{11}$ | 22,9 $C_{13}$ | 20 | 28,0 | 52,0 | 20,0 | 35/65 |
| 41 | 26,4 $A_{13}$ | 55,0 $B_{21}$ | 18,6 $C_{13}$ | 24 | 19,0 | 35,2 | 45,8 | 35/65 |
| 42 | 8,1 $A_{13}$ | 73,3 $B_{11}$ | 18,6 $C_{23}$ | 24 | 19,0 | 35,2 | 45,8 | 35/65 |
| 43 | 8,1 $A_{13}$ | 73,3 $B_{11}$ | 18,6 $C_{33}$ | 24 | 19,0 | 35,2 | 45,8 | 35/65 |
| 44 | 10,3 $A_{13}$ | 63,3 $B_{11}$ | 26,4 $C_{13}$ | 28 | 23,1 | 43,0 | 33,9 | 35/65 |
| 45 | 23,3 $A_{22}$ | 53,8 $B_{11}$ | 22,9 $C_{13}$ | 24 | 23,3 | 32,4 | 33,3 | 35/65 |
| 46 | 23,3 $A_{23}$ | 53,8 $B_{11}$ | 22,9 $C_{13}$ | 24 | 23,3 | 43,4 | 33,3 | 35/65 |
| 47 | 23,3 $A_{31}$ | 53,8 $B_{11}$ | 22,9 $C_{13}$ | 24 | 23,3 | 43,4 | 33,3 | 35/65 |
| 48 | 23,3 $A_{32}$ | 53,8 $B_{11}$ | 22,9 $C_{13}$ | 24 | 23,3 | 43,4 | 33,3 | 35/65 |
| 49 | 8,1 $A_{11}$ | 73,3 $B_{11}$ | 18,6 $C_{11}$ | 24 | 19,0 | 35,2 | 45,8 | 35/65 |
| 50 | 8,1 $A_{12}$ | 73,3 $B_{11}$ | 18,6 $C_{14}$ | 24 | 19,0 | 35,2 | 45,8 | 35/65 |
| 51 | 8,1 $A_{13}$ | 73,3 $B_{11}$ | 18,6 $C_{14}$ | 24 | 19,0 | 35,2 | 45,8 | 35/65 |
| 52 | 23,3 $A_{13}$ | 53,3 $B_{11}$ | 22,9 $C_{14}$ | 24 | 23,3 | 43,4 | 33,3 | 35/65 |
| 53 | 44,7 $A_{13}$ | 26,7 $B_{11}$ | 28,6 $C_{14}$ | 24 | 29,2 | 54,1 | 16,7 | 35/65 |
| 54 | 19,0 $A_{13}$ | 66,7 $B_{11}$ | 14,3 $C_{14}$ | 20 | 17,5 | 32,5 | 50,0 | 35/65 |
| 55 | 29,1 $A_{13}$ | 53,8 $B_{11}$ | 17,1 $C_{14}$ | 20 | 21,0 | 39,0 | 40,0 | 35/65 |
| 56 | 50,4 $A_{13}$ | 26,7 $B_{11}$ | 22,9 $C_{14}$ | 20 | 28,0 | 52,0 | 20,0 | 35/65 |
| 57 | 26,4 $A_{13}$ | 55,0 $B_{21}$ | 18,6 $C_{14}$ | 24 | 19,0 | 35,2 | 45,8 | 35/65 |
| 58 | 8,1 $A_{13}$ | 73,3 $B_{11}$ | 18,6 $C_{24}$ | 24 | 19,0 | 35,2 | 45,8 | 35/65 |
| 59 | 8,1 $A_{13}$ | 73,3 $B_{11}$ | 18,6 $C_{24}$ | 24 | 19,0 | 35,2 | 45,8 | 35/65 |
| 60 | 10,3 $A_{13}$ | 63,3 $B_{11}$ | 26,4 $C_{14}$ | 28 | 23,1 | 43,0 | 33,9 | 35/65 |
| 61 | 23,3 $A_{22}$ | 53,8 $B_{11}$ | 22,9 $C_{14}$ | 24 | 23,3 | 43,4 | 33,3 | 35/65 |
| 62 | 23,3 $A_{31}$ | 53,8 $B_{11}$ | 22,9 $C_{14}$ | 24 | 23,3 | 43,4 | 33,3 | 35/65 |
| 63 | 23,3 $A_{32}$ | 53,8 $B_{11}$ | 22,9 $C_{14}$ | 24 | 23,3 | 43,4 | 33,3 | 35/65 |

Vergleichsversuch

| | A [Teile] | B [Teile] | C [Teile] | Anteil % | $cb_1$ | $cb_2$ | bb | Verhältnis |
|---|---|---|---|---|---|---|---|---|
| 1 | 5,0 $A_{13}$ | 73,3 $B_{11}$ | 21,7 $C_{11}$ | 24 | 51,5 | 2,7 | 45,8 | 95/5 |
| 2 | 6,7 $A_{13}$ | 73,3 $B_{11}$ | 20,0 $C_{12}$ | 24 | 51,5 | 2,7 | 45,8 | 95/5 |
| 3 | 8,1 $A_{13}$ | 73,3 $B_{11}$ | 18,6 $C_{13}$ | 24 | 51,5 | 2,7 | 45,8 | 95/5 |
| 4 | 8,1 $A_{13}$ | 73,3 $B_{11}$ | 18,6 $C_{13}$ | 24 | 51,5 | 2,7 | 45,8 | 95/5 |

Tabelle 4 (Fortsetzung)

| Beispiel Nr. | Mechanische Eigenschaften $a_{KI}$ [kJ/m²] | | | FBT [Nm] | | | MFI | Vicat Temp. °C | Reflexion KT 1 % | KT 2 % |
|---|---|---|---|---|---|---|---|---|---|---|
| | 20°C | −20°C | −40°C | 20°C | −20°C | −40°C | | | | |
| 1 | 20 | 15 | 10 | 24 | 17 | 18 | 4,8 | 92,5 | 46 | 11 |
| 2 | 20 | 14 | 12 | 24 | 19 | 18 | 6,0 | 93,0 | 46 | 11 |
| 3 | 21 | 15 | 13 | 23 | 21 | 19 | 5,0 | 93,0 | 46 | 11 |
| 4 | 19 | 11 | 10 | 25 | 22 | 18 | 5,1 | 95,0 | 42 | 10 |
| 5 | 19 | 11 | 11 | 27 | 22 | 20 | 4,6 | 95,5 | 44 | 12 |
| 6 | 18 | 12 | 10 | 25 | 17 | 13 | 8,6 | 96,0 | 43 | 9 |
| 7 | 18 | 14 | 9 | 26 | 16 | 11 | 11,0 | 96,5 | 46 | 8 |
| 8 | 19 | 12 | 90 | 27 | 14 | 8 | 12,3 | 95,0 | 44 | 9 |
| 9 | 21 | 14 | 14 | 25 | 21 | 20 | 6,5 | 94,5 | 39 | 8 |
| 10 | 22 | 15 | 13 | 26 | 20 | 18 | 4,9 | 94,0 | 46 | 10 |
| 11 | 20 | 14 | 13 | 25 | 19 | 18 | 4,7 | 95,0 | 45 | 11 |
| 12 | 21 | 16 | 15 | 30 | 21 | 21 | 3,7 | 87,0 | 40 | 6 |
| 13 | 16 | 10 | 8 | 19 | 14 | 14 | 6,0 | 92,0 | 45 | 10 |
| 14 | 14 | 10 | 7 | 20 | 13 | 11 | 7,4 | 94,0 | 44 | 11 |
| 15 | 20 | 14 | 12 | 25 | 19 | 17 | 3,9 | 98,0 | 45 | 11 |
| 16 | 20 | 13 | 13 | 26 | 18 | 8 | 4,2 | 99,0 | 46 | 11 |
| 17 | 15 | 11 | 6 | 16 | 11 | 11 | 6,2 | 92,0 | 58 | 24 |
| 18 | 14 | 10 | 6 | 17 | 10 | 10 | 6,5 | 92,0 | 58 | 23 |
| 19 | 15 | 11 | 9 | 18 | 11 | 10 | 7,0 | 92,5 | 61 | 26 |
| 20 | 14 | 8 | 6 | 19 | 12 | 11 | 5,7 | 92,5 | 56 | 23 |
| 21 | 13 | 8 | 5 | 19 | 14 | 11 | 5,1 | 93,0 | 57 | 21 |
| 22 | 12 | 9 | 5 | 18 | 11 | 9 | 7,2 | 94,5 | 56 | 19 |
| 23 | 12 | 9 | 4 | 17 | 11 | 8 | 9,4 | 95,0 | 60 | 25 |
| 24 | 13 | 8 | 4 | 17 | 10 | 6 | 10,6 | 94,5 | 58 | 25 |
| 25 | 15 | 11 | 9 | 18 | 13 | 11 | 8,0 | 93,0 | 49 | 16 |
| 26 | 14 | 10 | 8 | 18 | 12 | 9 | 7,1 | 92,5 | 60 | 26 |
| 27 | 14 | 11 | 7 | 17 | 12 | 10 | 8,2 | 92,5 | 59 | 24 |
| 28 | 15 | 11 | 9 | 20 | 15 | 11 | 4,1 | 89,0 | 54 | 23 |
| 29 | 10 | 8 | 5 | 13 | 10 | 6 | 6,5 | 91,5 | 57 | 25 |
| 30 | 10 | 7 | 4 | 13 | 9 | 5 | 6,0 | 91,5 | 56 | 26 |
| 31 | 15 | 10 | 8 | 18 | 14 | 11 | 5,3 | 97,0 | 58 | 23 |
| 32 | 15 | 11 | 8 | 19 | 14 | 10 | 5,7 | 97,5 | 59 | 23 |
| 33 | 20 | 11 | 8 | 26 | 21 | 16 | 8,0 | 92,5 | 51 | 13 |
| 34 | 21 | 11 | 9 | 27 | 23 | 17 | 8,4 | 93,0 | 51 | 13 |
| 35 | 21 | 12 | 9 | 28 | 22 | 17 | 8,1 | 93,0 | 52 | 13 |
| 36 | 20 | 10 | 8 | 26 | 22 | 15 | 9,2 | 93,5 | 53 | 11 |
| 37 | 22 | 9 | 5 | 27 | 23 | 14 | 10,1 | 94,0 | 54 | 15 |
| 38 | 20 | 11 | 8 | 26 | 23 | 12 | 12,7 | 96,0 | 51 | 12 |
| 39 | 18 | 10 | 7 | 24 | 22 | 10 | 13,9 | 96,0 | 52 | 12 |
| 40 | 19 | 11 | 5 | 25 | 21 | 14 | 16,0 | 96,5 | 54 | 13 |
| 41 | 21 | 13 | 9 | 27 | 23 | 16 | 8,9 | 93,5 | 45 | 9 |
| 42 | 21 | 12 | 9 | 28 | 21 | 16 | 8,3 | 93,0 | 52 | 13 |
| 43 | 20 | 11 | 8 | 27 | 22 | 17 | 8,0 | 92,5 | 52 | 12 |
| 44 | 23 | 14 | 9 | 30 | 24 | 16 | 5,1 | 88,0 | 54 | 11 |
| 45 | 16 | 9 | 6 | 22 | 14 | 11 | 8,3 | 91,5 | 52 | 12 |
| 46 | 15 | 8 | 6 | 22 | 14 | 11 | 8,1 | 92,0 | 51 | 10 |
| 47 | 20 | 10 | 8 | 27 | 22 | 14 | 8,0 | 99,0 | 53 | 12 |
| 48 | 21 | 10 | 9 | 26 | 23 | 15 | 8,5 | 100,0 | 52 | 12 |
| 49 | 19 | 10 | 8 | 25 | 20 | 15 | 8,0 | 92,0 | 48 | 10 |
| 50 | 19 | 11 | 8 | 26 | 22 | 17 | 7,7 | 92,0 | 49 | 10 |
| 51 | 20 | 11 | 9 | 27 | 21 | 16 | 8,6 | 92,0 | 49 | 11 |
| 52 | 20 | 11 | 8 | 27 | 24 | 16 | 9,8 | 92,5 | 50 | 11 |
| 53 | 21 | 9 | 6 | 27 | 22 | 14 | 10,4 | 93,0 | 50 | 14 |
| 54 | 20 | 9 | 9 | 26 | 23 | 15 | 11,1 | 94,0 | 49 | 9 |
| 55 | 19 | 10 | 7 | 26 | 21 | 14 | 11,9 | 94,5 | 49 | 11 |
| 56 | 18 | 9 | 6 | 25 | 20 | 14 | 12,5 | 94,0 | 50 | 10 |
| 57 | 21 | 11 | 9 | 27 | 23 | 16 | 18,5 | 92,5 | 43 | 7 |
| 58 | 20 | 11 | 8 | 26 | 22 | 16 | 8,7 | 92,5 | 49 | 11 |
| 59 | 21 | 10 | 8 | 26 | 21 | 16 | 8,3 | 91,5 | 49 | 11 |

Tabelle 4 (Fortsetzung)

| Beispiel Nr. | Mechanische Eigenschaften | | | | | | MFI | Vicat Temp. °C | Reflexion | |
|---|---|---|---|---|---|---|---|---|---|---|
| | $a_{KI}$ [kJ/m²] | | | FBT [Nm] | | | | | KT 1 % | KT 2 % |
| | 20°C | −20°C | −40°C | 20°C | −20°C | −40°C | | | | |
| 60 | 22 | 13 | 10 | 29 | 23 | 18 | 6,0 | 88,5 | 51 | 9 |
| 61 | 15 | 7 | 5 | 17 | 14 | 10 | 7,9 | 91,0 | 49 | 9 |
| 62 | 20 | 11 | 9 | 26 | 23 | 16 | 9,0 | 100,0 | 50 | 11 |
| 63 | 19 | 10 | 8 | 26 | 22 | 14 | 9,2 | 100,5 | 49 | 11 |
| Vergleichsversuch | | | | | | | | | | |
| 1 | 13 | 8 | 4 | 10 | 8 | 4 | 2,4 | 89,0 | 28 | 5 |
| 2 | 7 | 4 | 2 | 6 | 4 | 2 | 4,2 | 90,0 | 34 | 10 |
| 3 | 12 | 4 | 1 | 13 | 7 | 3 | 4,1 | 89,5 | 27 | 4 |
| 4 | 11 | 3 | 1 | 9 | 7 | 2 | 2,7 | 88,5 | 23 | 3 |

## Patentansprüche

1. Formmasse, enthaltend im wesentlichen

A    ein aus einer harten Phase aufgebauten Mischpolymerisat, das

$a_1$)    mindestens ein vinylaromatisches Monomer in Mengen von 80 bis 60 Gew.%,

$a_2$)    mindestens ein äthylenisch ungesättigtes Monomeres in Mengen von 40 bis 20 Gew.% als Bestandteil einpolymerisiert enthält, oder ein Alkylmethacrylat in Mengen von 40 bis 20 Gew.%,

B    ein Pfropfmischpolymerisat, das

ba)    eine Hartphase und

bb)    eine Elastomerphase aufweist mit einem Partikeldurchmesser (Zahlenmittel) im Bereich von 0,5 bis 5 μm und wobei das Pfropfmischpolymerisat B mindestens je

bc)    ein vinylaromatisches Monomeres

bd)    ein äthylenisch ungesättigtes Monomeres be)    ein aliphatisches Dien als Monomeres

einpolymerisiert enthält und zu dessen Herstellung 100 Gew.-Teile einer Mischung aus den ein hartes Polymerisat bildenden Monomeren (bc + bd) in Gegenwart von 10 bis 20 Gew.-Teilen eines darin und ggf. zusätzlich in einem interten organischen Lösungsmittel gelösten elastomeren Polymerisats oder -Copolymerisats als Pfropfgrundlage, das aus den Monomeren be) oder be) + bc) oder be) + bd) aufgebaut ist, polymerisiert worden ist, und wobei 20 bis 50 Gew.% der ein hartes Polymerisat bildenden Monomeren (bc und bd), bezogen auf die Summe von bc) und bd), auf die Pfropfgrundlage aufgepfropft worden sind,

C    ein Pfropfmischpolymerisat, das

ca)    eine Hartphase als Pfropfreis und

cb)    eine Elastomerphase als Pfropfgrundlage aufweist, wobei letztere im wesentlichen Partikel zweier unterschiedlicher mittlerer Teilchendurchmesser (Zahlenmittel) aufweist, nämlich

$cb_1$)    im Bereich von 0,05 bis 0,18 μm, insbesondere 0,08 bis 0,15 μm,

$cb_2$)    im Bereich von 0,25 bis 0,6 μm, insbesondere 0,35 bis 0,50 μm, und wobei das Pfropfmischpolymerisat C mindestens je ein

cc)    vinylaromatisches Monomeres

cd)    ein äthylenisch ungesättigtes Monomeres

ce)    ein aliphatisches Dien als Monomeres und/ oder mindestens ein Monomeres eines Acrylsäurealkylesters mit 2 bis 8 C-Atomen

als Bestandteile enthält und bei dessen Herstellung eine Mischung der die Hartphase bildenden Monomeren (cc und cd) in einer wässrigen Emulsion auf einem die elastomere Phase bildenden kautschukartigen Polymerisat der Monomeren ce) als Pfropfgrundlage in einem Anteil von 20 bis 60 Gew.%, bezogen auf die Summe von cc), cd) und ce), aufgepropft worden sind, dadurch gekennzeichnet, dass die Formmasse 5 bis 80 Gew.% des Mischpolymerisats A und 20 bis 95 Gew.% der Pfropfmischpolymerisate B + C, jeweils bezogen auf die Summe von A + B + C, enthält und der Anteil der Elastomerphase $cb_1$) des Pfropfmischpolymerisats C weniger als 60 Gew.%, insbesondere weniger als 30 Gew.%, bezogen auf die Summe der Elastomerphasen $cb_1$), $cb_2$) und bb), beträgt und das Gewichtsverhältnis der Elastomerphasen $cb_1$) : $cb_2$) im Bereich von 80 : 20 bis 20 : 80 liegt.

2. Formmassen nach Anspruch 1, dadurch gekennzeichnet, dass bei der Herstellung des Pfropfmischpolymerisats B die Monomerenmischung 78 bis 65 Gew.% der Monomeren bc) und 22 bis 35 Gew.% der Monomeren bd) enthält.

3. Formmasse nach Anspruch 2, dadurch gekennzeichnet, dass die Monomerenmischung auf ein darin gelöstes Polymerisat aus den Monomeren be), insbesondere Butadien, polymerisiert wird.

4. Formmasse nach Anspruch 2, dadurch gekennzeichnet, dass man die Monomerenmischung auf ein Copolymerisat, das zu mindestens 50 Gew.% aus den Monomeren be) und aus bis zu 50 Gew.% aus dem Monomeren bc), insbesondere Styrol, aufgebaut ist, aufpolymerisiert.

5. Formmasse nach Anspruch 1, dadurch gekennzeichnet, dass die Partikeldurchmesser (Zahlenmittel) der Elastomerphase bb) im Bereich von 0,9 bis 2,1 µm liegt.

6. Formteile aus Formmassen gemäss Anspruch 1.

## Claims

1. A molding material which essentially contains

A    a copolymer, constituting a hard phase, which contains, as copolymerized units,

$a_1$)    one or more vinyl-aromatic monomers in amounts of from 80 to 60% by weight and

$a_2$)    one or more ethylenically unsaturated monomers in amounts of from 40 to 20% by weight, or an alkyl methacrylate in amounts of from 40 to 20% by weight,

B    a graft copolymer which contains

ba)    a hard phase and

bb)    an elastomer phase with a number-average particle diameter of from 0.5 to 5 µm, the graft copolymer B containing, as copolymerized units,

bc)    one or more vinyl-aromatic monomers, bd)    one or more ethylenically unsaturated monomers, and

be)    one or more aliphatic diene monomers,

the graft copolymer having been prepared by polymerizing 100 parts by weight of a mixture of the monomers (bc + bd), which form a hard polymer, in the presence of from 10 to 20 parts by weight of an elastomeric polymer or copolymer as the grafting base, the said grafting base being dissolved in the monomers (bc + bd), with or without addition of an inert organic solvent, and the said base having been synthesized from the monomers be), be) + bc), or be) + bd), where 20 to 50% by weight of the total amount of the monomers (bc + bd) forming a hard polymer have been grafted onto the grafting base and

C    a graft copolymer which consists of

ca)    a hard phase as grafted shell, and

cb)    an elastomer phase as the grafting base, the latter essentially containing particles having two different mean number-average diameter ranges, namely

$cb_1$)    from 0.05 to 0.18 µm, especially from 0.08 to 0.15 µm, and

$cb_2$)    from 0.25 to 0.6 µm, especially from 0.35 to 0.50 µm, the graft copolymer C containing, as polymerized units,

cc)    one or more vinyl-aromatic monomers,

cd)    one or more ethylenically unsaturated monomers and

ce)    one or more aliphatic diene monomers and/or one or more alkyl acrylates where alkyl is of 2 to 8 carbon atoms,

the graft copolymer C having been prepared by grafting, in aqueous emulsion, the monomers (cc and cd) forming a hard phase onto a rubber-like polymer of the monomer(s) ce), which form an elastomer phase and act as the grafting base, the proportion of cc) and cd) being from 20 to 60% by weight, based on the sum of cc), cd) and ce), wherein the copolymer A constitutes from 5 to 80% by weight, and the graft copolymers B and C together constitute from 20 to 95% by weight, of the molding material, i.e. of the sum of A + B + C, and the proportion of the elastomer phase $cb_1$) of the graft copolymer C is less than 60% by weight, in particular less than 30% by weight, of the sum of the elastomer phases $cb_1$), $cb_2$) and bb), and the weight ratio of the elastomer phase $cb_1$) to $cb_2$) is from 80:20 to 20:80.

2. A molding material as claimed in claim 1, wherein, in the preparation of the graft copolymer B, the monomer mixture contains from 78 to 65% by weight of monomer bc) and 22 to 35% by weight of monomer bd).

3. A molding material as claimed in claim 2, wherein the monomer mixture is polymerized onto a polymer of the monomer(s) be), especially butadiene, which polymer has been dissolved in the monomer mixture.

4. A molding material as claimed in claim 2, wherein the monomer mixture is polymerized onto a copolymer which is synthesized from not less than 50% by weight of monomer be) and from up to 50% by weight of monomer bc), especially styrene.

5. A molding material as claimed in claim 1, wherein the number-average particle diameter of the elastomer phase bb) is from 0.9 to 2.1 µm.

6. Moldings produced from a molding material as claimed in claim 1.

## Revendications

1. Masse de moulage contenant essentiellement

A    un copolymère constitué d'une phase dure, qui contient à l'état polymérisé

$a_1$)    au moins un monomère vinylaromatique en quantité de 80 à 60% en poids,

$a_2$)    au moins un monomère à insaturation éthylénique en quantité de 40 à 20% en poids en tant que constituant, ou un méthacrylate d'alkyle en quantité de 40 à 20% en poids.

B    un copolymère greffé qui contient

ba)    une phase dure et

bb)    une phase élastomère à un diamètre de particule (moyenne en nombre) dans l'intervalle de 0,5 à 5 micron, le copolymère greffé B contenant à l'état polymérisé

bc)    au moins un monomère vinylaromatique bd)    au moins un monomère à insaturation éthylénique

be)    un diène aliphatique en tant que monomère,

et pour la préparation duquel on a polymérisé 100 parties en poids d'un mélange des monomères formant un polymère dur (bc + bd) en présence de 10 à 20 parties en poids d'un polymère ou copolymère élastomère dissous dans ce mélange et éventuellement dans un solvant organique inerte, qui constitue le support de greffage et est constitué des monomères be) ou be) + bc) ou be) + bd), 20 à 50% en poids des monomères formant un polymère dur (bc) et (bd) ayant été greffés sur le support de greffage, par rapport à la somme de bc) et bd),

C un copolymère greffé qui comprend
ca) une phase dure en tant que grain de greffage et
cb) une phase élastomère en tant que support de greffage, cette dernière contenant essentiellement des particules à deux diamètres de particules moyens différents (moyenne en nombre), à savoir
cb$_1$) dans l'intervalle de 0,05 à 0,18 micron, plus spécialement de 0,08 à 0,15 micron,
cb$_2$) dans l'intervalle de 0,25 à 0,6 micron, plus spécialement de 0,35 à 0,50 micron, le copolymère greffé C contenant en tant que constituants
cc) au moins un monomère vinylaromatique
cd) au moins un monomère à insaturation éthylénique
ce) au moins un diène aliphatique en tant que monomère

et/ou au moins un monomère d'un acrylate d'alkyle en C2-C8, à la préparation duquel on a greffé un mélange des monomères formant la phase dure (cc et cd) dans une émulsion aqueuse sur un polymère du type caoutchouc, formant la phase élastomère, des monomères ce), servant de support de greffage, en proportions de 20 à 60% en poids, par rapport à la somme de cc), cd) et ce), caractérisée en ce que la masse de moulage contient de 5 à 80% en poids du copolymère A et de 20 à 95% en poids des copolymères greffés B + C, dans les deux cas par rapport à la somme de A + B + C, et la proportion de la phase élastomère cb$_1$) du copolymère greffé C représente moins de 60% en poids, plus particulièrement moins de 30% en poids, par rapport à la somme des phases élastomères cb$_1$), cb$_2$) et bb) et les proportions relatives en poids entre les phases élastomères cb$_1$)/cb$_2$) se situent dans l'intervalle de 80 : 20 à 20 : 80.

2. Masses de moulage selon la revendication 1 caractérisées en ce que, à la préparation du polymère greffé B, le mélange des monomères contient 78 à 65% en poids des monomères bc) et 22 à 35% en poids des monomères bd).

3. Masses de moulage selon la revendication 2, caractérisées en ce que le mélange des monomères est polymérisé sur un polymère des monomères be), en particulier du butadiène, dissous dans ce mélange.

4. Masses de moulage selon la revendication 2, caractérisées en ce que l'on polymérise le mélange des monomères sur un copolymère constitué d'au moins 50% en poids des monomères be) et d'une proportion allant jusqu'à 50% en poids des monomères bc), en particulier le styrène.

5. Masse de moulage selon la revendication 1, caractérisée en ce que le diamètre de particule (moyenne en nombre) de la phase élastomère bb) se situe dans l'intervalle de 0,9 à 2,1 micron.

6. Pièces moulées à partir de masses de moulage selon la revendication 1.